# EUROPEAN PATENT APPLICATION

(11) **EP 1 489 356 A1**
(43) Date of publication of application: **22.12.2004**
(21) Application number: 04022569.0
(22) Date of filing: 19.04.2002
(51) Int. Cl.: F23J 15/02, F23G 5/027

(54) **Waste treatment apparatus and method**

(30) Priority: 19.04.2001 JP 2001120601; 23.07.2001 JP 2001221031
(62) Divisional of application: 02720517.8
(71) Applicant: EBARA CORPORATION, Ohta-ku, Tokyo 144-8510 (JP)
(72) Inventor: Abe, Shinya, Tokyo 144-8510 (JP); Shiba, Takeshige, Tokyo 144-8510 (JP)
(74) Representative: Emde, Eric

(57) **Abstract**

The present invention relates to waste treatment apparatus and method for combusting and treating wastes such as municipal wastes, refuse-derived fuel (RDF), and plastic wastes. The waste treatment apparatus (101) comprises a gasification furnace (5) for gasifying wastes (a) to produced combustible gas (m), a slagging combustion furnace (8) for combusting the combustible gas and melting solid components contained in the combustible gas to generate exhaust gas (j), a first filter (13a) for filtrating the exhaust gas discharged from the slagging combustion furnace and collecting fly ash (h1) contained in the exhaust gas, an injection device for injecting a neutralizer into the exhaust gas discharged from the first filter, a second filter for filtrating the exhaust gas, and collecting neutralized ash, a recovery device (14) for recovering the neutralized ash, and a conveying device (41a) for conveying fly ash collected by the first filter to the slagging combustion furnace.

## Description

### Technical Field

The present invention relates to waste treatment apparatus and method, and more particularly to waste treatment apparatus and method for combusting and treating wastes such as municipal wastes, refuse-derived fuel (RDF), plastic wastes, waste FRP, biomass wastes, automobile wastes and waste oil.

The present invention also relates to two-stage gasification apparatus and method comprising a fluidized-bed gasification furnace and a swirling-type slagging combustion gasification furnace.

### Background Art

As a waste treatment method, there has been known a method in which wastes are pyrolyzed and gasified at a low temperature in a gasification furnace to produce combustible gas, the produced combustible gas is supplied to a slagging combustion furnace, and then the produced combustion gas is combusted at a high temperature to melt solid components contained in the produced combustion gas and recover slag from a bottom of the slagging combustion furnace. Exhaust gas generated by combustion in the slagging combustion furnace is led to a waste heat boiler in which steam is generated by heat exchange with the exhaust gas for thereby recovering heat from the exhaust gas. The exhaust gas discharged from the waste heat boiler is led to a first bag filter in which ash contained in the exhaust gas is collected. The collected ash is treated by a slagging pyrolysis process, or is treated by a neutralization process using slaked lime, and is then discarded in a landfill site. The exhaust gas discharged from the first bag filter is neutralized by mixing slaked lime, and then the exhaust gas is led to a second bag filter in which neutralized ash is collected.

According to the conventional waste treatment apparatus, there exists a large amount of collected ash which is not slagged, but is neutralized by a neutralizer and is discarded in the landfill site. In this case, if the percentage of slagging is further increased, the amount of neutralizer to be used can be decreased, and the collected ash to be discarded in the landfill site can be decreased. Therefore, there has been a demand for increasing the percentage of slagging, for the purpose of a reduction in costs and a prolonging of the life of the landfill site.

### Disclosure of Invention

The present invention has been made in view of the above drawbacks. It is therefore an object of the present invention to provide waste treatment apparatus and method which can increase the percentage of slagging, reduce the amount of the collected ash required to be neutralized, and reduce the amount of neutralizer to be used.

In order to achieve the above object of the present invention, according to an aspect of the present invention, there is provided a waste treatment apparatus comprising: a gasification furnace for gasifying wastes to produce combustible gas; a slagging combustion furnace for combusting the combustible gas and melting solid components contained in the combustible gas to generate exhaust gas; a first filter for filtrating the exhaust gas discharged from the slagging combustion furnace and collecting fly ash contained in the exhaust gas; an injection device for injecting a neutralizer into the exhaust gas discharged from the first filter; a second filter for filtrating the exhaust gas into which the neutralizer has been injected, and collecting'neutralized ash contained in the exhaust gas; a recovery device for recovering the neutralized ash which has been collected; and a conveying device for conveying fly ash collected by the first filter to the slagging combustion furnace.

According to the present invention, the first filter 13a, the second filter 13b, the injection device 14, the conveying decide 41a, and the recovery device 17 are provided. Thus, exhaust gas j is filtrated by the first filter 13a, and fly ash h1 collected by the first filter 13a is conveyed by the conveying device 41a and returned to the slagging combustion furnace 8, a neutralizer i is injected into the exhaust gas j discharged from the first filter 13a by the injection device 14, the exhaust gas j into which the neutralizer i has been injected is filtrated by the second filter 13b to collect the neutralized ash h2, and the collected the neutralized ash h2 is recovered by the recovery device 17.

Therefore, the fly ash h1 collected by the first filter 13a is conveyed to the slagging combustion furnace 8, and hence the fly ash h1 is melted in the slagging combustion furnace 8 to thus increase the percentage of slagging in the slagging combustion furnace 8, and the collected ash which requires neutralization treatment can be decreased. Further, after the fly ash h1 is collected in the first filter 13a, the neutralizer i is injected into the exhaust gas j, and hence the amount of the neutralizer i to be used can be decreased and the amount of neutralized ash h2 can be decreased. Further, because the fly ash h1 which does not contain the neutralized ash h2 is conveyed to the slagging combustion furnace 8, the fly ash h1 can be efficiently melted and treated. Further, since the exhaust gas j which does not contain components of the neutralizer i is discharged from the slagging combustion furnace 8, and the fly ash h1 collected by the first filter 13a does not contain components of the neutralizer i, slag e having a high quality can be produced.

According to a preferred aspect of the present invention, a waste treatment apparatus further comprises a waste heat boiler for recovering thermal energy of the exhaust gas discharged from the slagging combustion furnace, and a conveying device for conveying fly ash collected by the waste heat boiler to the slagging combustion furnace.

With this arrangement, because the conveying device 41b is provided, the fly ash h1 collected by the waste heat boiler 10 is conveyed to the slagging combustion furnace 8 by the conveying device 41b, and melted in the slagging combustion furnace 8, thus further increasing the percentage of slagging in the slagging combustion furnace 8.

According to a preferred aspect of the present invention, a waste treatment apparatus further comprises an economizer for preheating water to be fed to the waste heat boiler by thermal energy of the exhaust gas discharged from the waste heat boiler, and a conveying device for conveying fly ash collected by the economizer to the slagging combustion furnace.

With this arrangement, because the conveying device 41c is provided, the fly ash h1 collected by the economizer 12 is conveyed to the slagging combustion furnace 8 by the conveying device 41c, and melted in the slagging combustion furnace 8, thus further increasing the percentage of slagging in the slagging combustion furnace 8.

According to a preferred aspect of the present invention, a waste treatment apparatus further comprises an air preheater for preheating combustion air to be fed to the gasification furnace and the slagging combustion furnace by thermal energy of the exhaust gas discharged from the waste heat boiler, and a conveying device for conveying fly ash collected by the air preheater to the slagging combustion furnace.

With this arrangement, because the conveying device 41c is provided, the fly ash h1 collected by the air preheater 11 is conveyed to the slagging combustion furnace 8 by the conveying device 41c, and melted in the slagging combustion furnace 8, thus further increasing the percentage of slagging in the slagging combustion furnace 8.

According to a preferred aspect of the present invention, a waste treatment apparatus further comprises an introduction device for introducing the fly ash conveyed to the slagging combustion furnace into the slagging combustion furnace in a direction along an inner circumferential surface of the slagging combustion furnace.

With this arrangement, because the introduction devices 22 and 23 are provided, the fly ash h1 conveyed to the slagging combustion furnace 8 can be introduced into the slagging combustion furnace in a direction along an inner circumferential surface 8e of the slagging combustion furnace to form a swirling flow in the slagging combustion furnace 8, and the fly ash h1 can be efficiently melted and the percentage of slagging in the slagging combustion furnace 8 can be further increased.

According to another aspect of the present invention, there is provided a waste treatment apparatus comprising: a gasification furnace for gasifying wastes to produce combustible gas; a slagging combustion furnace for combusting the combustible gas and melting solid components contained in the combustible gas to generate exhaust gas; a filter for filtrating the exhaust gas discharged from the slagging combustion furnace and collecting fly ash contained in the exhaust gas; a conveying device for conveying the fly ash collected by the filter to the slagging combustion furnace; and an introduction device for introducing the fly ash conveyed to the slagging combustion furnace into the slagging combustion furnace.

According to the present invention, because the filter 13a, the conveying device 41a and the introduction device 23 are provided, exhaust gas j is filtrated by the filter 13a, the collected fly ash h1 is conveyed to the slagging combustion furnace 8 by the conveying device 41a, the conveyed fly ash h1 can be introduced into the slagging combustion furnace 8 in a direction along the inner circumferential surface 8e of the slagging combustion furnace 8 by the introduction device 23 to form a swirling flow in the slagging combustion furnace 8, and the fly ash h1 can be efficiently melted and the percentage of slagging in the slagging combustion furnace 8 can be further increase.

According to a preferred aspect of the present invention, the introduction device is mounted on the slagging combustion furnace at a location where the combustible gas which has not been combusted exists.

With this arrangement, because the introduction devices 22 and 23 are mounted on the slagging combustion furnace 8 at the location where combustible gas m supplied from the gasification furnace 5 exists and such combustible gas has not been combusted, the introduced fly ash h1 is conveyed by the flow of the combustible gas m to the flame formed by combustion in the slagging combustion furnace 8, and hence the fly ash h1 is exposed to the maximum temperature range. Therefore, the fly ash h1 can be efficiently melted.

According to a preferred aspect of the present invention, a waste treatment apparatus further comprises an inlet duct for introducing the combustible gas into the slagging combustion furnace, and the introduction device is mounted on the inlet duct.

With this arrangement, the slagging combustion furnace 8 comprises the inlet duct 20 for introducing the combustible gas m into the slagging combustion furnace 8 in a direction along the inner circumferential surface 8e of the slagging combustion furnace 8, and the introduction devices 22 and 23 are mounted on the inlet duct 20. Therefore, the conveyed fly ash h1 can be introduced by the introduction devices 22 and 23 into the combustible gas m introduced in a direction along the inner circumferential surface 8e of the slagging combustion furnace 8 before the combustible gas m is combusted in the slagging combustion furnace 8. Thereafter, the combustible gas m introduced from the inlet duct 20 of the slagging combustion furnace 8 is combusted in the slagging combustion furnace 8 to generate flame, and hence the introduced fly ash h1 can pass through a high-temperature combustion range to thus melt the fly ash h1 efficiently.

According to another aspect of the present invention, there is provided a waste treatment method comprising: pyrolizing and gasifying wastes to produce combustible gas; combusting the combustible gas and melting solid components contained in the combustible gas to generate exhaust gas; filtrating the exhaust gas discharged from the slagging combustion furnace and collecting fly ash contained in the exhaust gas; injecting a neutralizer into the exhaust gas discharged from the first filter; filtrating the exhaust gas into which the neutralizer has been injected, by a second filter, and collecting neutralized ash contained in the exhaust gas; and returning the fly ash collected by the first filter to the slagging combustion furnace.

### Brief Description of Drawings

FIG. 1 is a schematic diagram of a waste treatment apparatus according to an embodiment of the present invention;
FIG. 2A is a front view of a swirling-type slagging combustion furnace, the view showing an arrangement of nozzles for return ash; and
FIG. 2B is a fragmentary plan view of the swirling-type slagging combustion furnace.

### Best Mode for Carrying Out the Invention

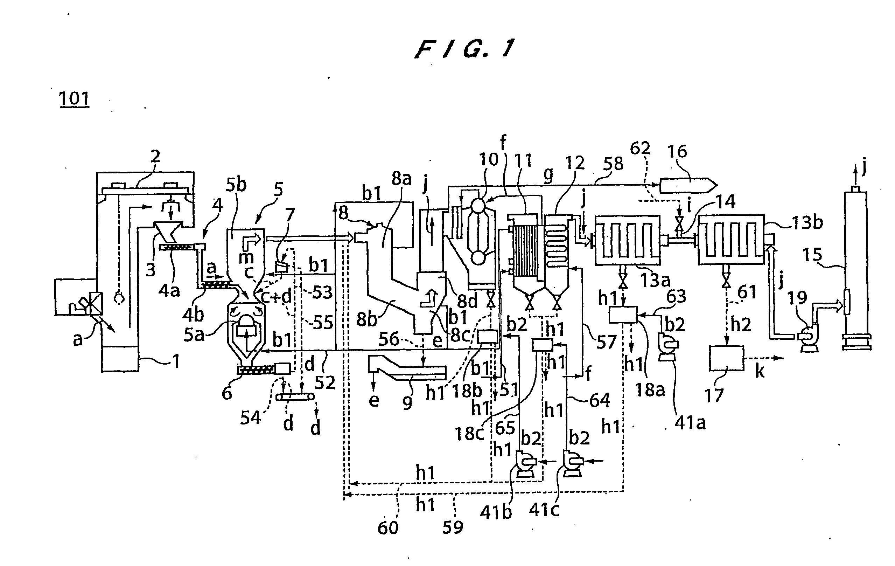

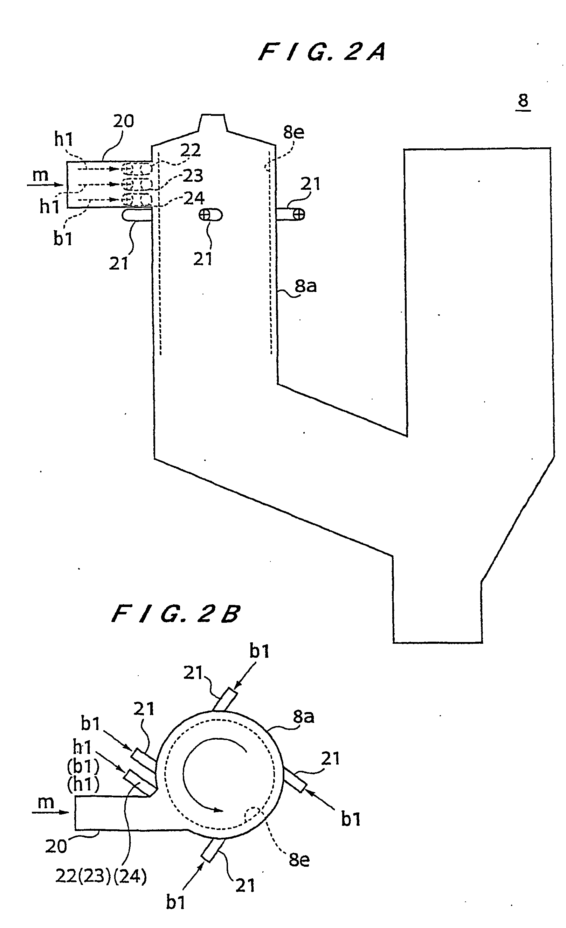

A waste treatment apparatus according to an embodiment of the present invention will be described below with reference to the drawings. In FIGS. 1, 2A and 2B, like or corresponding parts are denoted by like or corresponding reference numerals throughout views, and repetitive description is eliminated.

FIG. 1 is a schematic diagram of a waste treatment apparatus 101 according to an embodiment of the present invention. The waste treatment apparatus 101 comprises a waste pit 1 for storing wastes a, a waste hopper 3 for storing wastes a temporarily, a crane 2 for conveying the wastes (a) from the waste pit 1 to the waste hopper 3, and a waste feeder 4 for feeding the wastes (a) discharged from the waste hopper 3 to a fluidized-bed gasification furnace 5.

The waste treatment apparatus 101 comprises a fluidized-bed gasification furnace 5 for pyrolizing and gasifying the wastes (a) supplied at a constant rate by the waste feeder 4 at a low temperature to produce combustible gas m, an incombustible discharge apparatus 6 for discharging and classifying incombustibles d discharged from a bottom of the fluidized-bed gasification furnace 5 into small-sized incombustibles (c+d) containing silica sand c and large sized incombustibles d, and a vibrating screen 7 for vibrating and classifying the small-sized incombustibles (c+d) containing silica sand c into silica sand c and incombustibles d. The waste treatment apparatus 101 further comprises a swirling-type slagging combustion furnace 8 for combusting the produced gas m and melting solid components in the produced gas m. The swirling-type slagging combustion furnace 8 serves as a slagging combustion furnace. The waste feeder 4 comprises two-stage screw feeders 4a and 4b. The swirling-type slagging combustion furnace 8 has a circular shape in a horizontal cross section as shown in FIG. 2B and comprises a primary combustion chamber 8a, a secondary combustion chamber 8b, a slag separation section 8c, and a tertiary combustion chamber 8d.

Further, the waste treatment apparatus 101 comprises a slag conveyer 9 for conveying slag e discharged from a bottom of the swirling-type slagging combustion furnace 8, and a waste heat boiler 10 disposed immediately downstream of the swirling-type slagging combustion furnace 8 for recovering thermal energy from exhaust gas j discharged from the swirling-type slagging combustion furnace 8 and heating water f supplied thereto to generate steam g.

Further, the waste treatment apparatus 101 comprises an air preheater 11 for preheating combustion air b1 to be supplied to the fluidized-bed gasification furnace 5 and the swirling-type slagging combustion furnace 8, an economizer 12 for preheating water f to be supplied to the waste heat boiler 10, and a first bag filter 13a serving as a first filter (first ash separator/first ash collector) for filtrating the exhaust gas j discharged from the economizer 12 to collect fly ash h1 containing basic ash and heavy metal ash. The fly ash h1 collected by the first bag filter 13a is accumulated in an ash accumulator 18a, and then returned to the swirling-type slagging combustion furnace 8.

The ash accumulator 18a comprises an ash storage tank (not shown), and an ash discharge device (not shown) disposed below the ash storage tank for discharging ash dropped from the ash storage tank. The ash discharge device is connected to a blower 41a serving as a first conveying device for feeding carrier air b2 to the ash discharge device, and the carrier air b2 fed from the blower 41a to the ash discharge device conveys the fly ash h1 discharged from the ash discharge device to the swirling-type slagging combustion furnace 8 by pneumatic transportation. By adjusting the amount of ash discharged from the ash discharge device, the amount of the fly ash h1 conveyed to the swirling-type slagging combustion furnace 8 can be adjusted. A part of the fly ash h1 which is not returned to the swirling-type slagging combustion furnace 8 is discharged to the outside of the ash storage tank.

A second bag filter 13b serving as a second filter (second ash separator/second ash collector) is disposed at a subsequent stage of the first bag filter 13a, and an injection nozzle 14 serving as an injection device for injecting slaked lime i as a neutralizer is provided on a pipe which connects the first bag filter 13a and the second bag filter 13b. The slaked lime i is mixed into the exhaust gas j at the location immediately upstream of the second bag filter 13b to thus neutralize the exhaust gas j. The neutralized ash h2 contained in the exhaust gas j is collected by the second bag filter 13b.

The waste treatment apparatus 101 further comprises an induced draft fan 19 for inducing the exhaust gas j from the second bag filter 13b, a stack 15 for discharging the exhaust gas j to the atmosphere, a steam turbine 16 which is driven by steam g produced in the waste heat boiler 10, and an ash treatment device 17 serving as a recovery device for treating the neutralized ash h2 to form treated ash k.

Fly ash h1 is collected also by the waste heat boiler 10, the air preheater 11, and the economizer 12 due to reduction of flow velocity of the exhaust gas j. The fly ash h1 collected by the waste heat boiler 10 is accumulated in an ash accumulator 18b, and the fly ash h1 collected by the air preheater 11 and the economizer 12 is gathered, and then accumulated in an ash accumulator 18c. The fly ash h1 accumulated in the ash accumulators 18b and 18c is partly or wholly discharged from the ash accumulators 18b and 18c and joined together, and then returned to the swirling-type slagging combustion furnace 8. The ash accumulators 18b and 18c can discharge a part of the fly ash h1 to the outside.

The ash accumulators 18b and 18c comprise ash storage tanks (not shown), and ash discharge devices (not shown) disposed below the ash storage tanks for discharging ash dropped from the ash storage tanks, respectively. The ash discharge devices are connected to blowers 41b and 41c, respectively, for feeding carrier air b2 to the respective ash discharge devices, and the carrier air b2 fed from the blowers 41b and 41c to the respective ash discharge devices conveys the fly ash h1 discharged from the ash discharge devices to the swirling-type slagging combustion furnace 8 by pneumatic transportation. By adjusting the amount of ash discharged from the respective ash discharge devices, the amount of the fly ash h1 conveyed to the swirling-type slagging combustion furnace 8 can be adjusted. A part of the fly ash h1 which is not returned to the swirling-type slagging combustion furnace 8 is discharged to the outside of the respective ash storage tanks. The blower 41b serves as a second conveying device. The blower 41c serves as a third conveying device and also a fourth conveying device.

The combustion air b1 supplied to the air preheater 11, the combustion air b1 discharged from the air preheater and supplied to the fluidized-bed gasification furnace and the swirling-type slagging combustion furnace 8, silica sand c, incombustibles d discharged from the incombustible discharge apparatus 6, incombustibles d discharged from the vibrating screen 7, slag e, water f, steam g, collected fly ash h1 discharged from the first bag filter 13a and the economizer 12, collected fly ash h1 discharged from the waste heat boiler 10, neutralized ash h2, slaked lime i, carrier air b2 of the collected fly ash h1 discharged from the first bag filter 13a, carrier air b2 of the collected fly ash h1 discharged from the economizer 12, carrier air b2 of the collected fly ash h1 discharged from the waste heat boiler 10 are supplied through respective supply lines 51 to 65.

Next, operation of the waste treatment apparatus 101 according to the embodiment of the present invention will be described below. Wastes (a) carried in by a truck (not shown) are stored in the waste pit 1, and then the wastes a are supplied to the waste hopper 3 by the crane 2. The wastes (a) are withdrawn at a constant rate by the waste feeder 4 (two-stage screw feeders 4a and 4b) provided below the waste hopper 3, and supplied to the fluidized-bed gasification furnace 5.

The combustion air b1 is supplied to the bottom of the fluidized-bed gasification furnace 5 to form a fluidized bed of silica sand c over a diffuser plate 5a formed in the fluidized-bed gasification furnace 5. The wastes (a) are supplied into the fluidized-bed gasification furnace 5, and dropped into the fluidized bed of silica sand c which is kept at a low temperature of 450 to 650°C. Thus, the wastes (a) are brought into contact with the heated silica sand c and the combustion air b1, and pyrolyzed and gasified rapidly, thus producing combustible gas, tar and fixed carbon.

The fixed carbon is pulverized by a vigorous stirring motion in the fluidized bed. Further, the combustion air b1 is supplied also to a freeboard 5b formed in the upper portion of the fluidized-bed gasification furnace 5 for thereby gasifying tar and fixed carbon at a high temperature of 650 to 850°C. The silica sand c and the incombustibles d are discharged from the bottom of the fluidized-bed gasification furnace 5 by the incombustible discharge apparatus 6, and then classified. The incombustibles d contain metals such as iron, steel, copper, and aluminum. Since the interior of the fluidized-bed gasification furnace 5 is in a reducing atmosphere, metals can be recovered in a non-oxidized, and clean condition.

However, the secondary combustion caused by blowing of the combustion air b1 in the freeboard 5b is not essential in the present invention. The reason for performing the secondary combustion is to improve controllability of the fluidized-bed furnace, and prevent the temperature in the slagging combustion furnace from rising excessively in the case where combustible gas introduced from the fluidized-bed furnace into the slagging combustion furnace has a high calorific value. However, in the case where only combustible gas having a low calorific value is obtained, the secondary combustion in the freeboard is not essential.

Further, in the fluidized-bed gasification furnace, it is particularly desirable to form a revolving flow of a fluidized medium such as silica sand. This is because a slow gasification of wastes can be performed by the revolving flow of the fluidized medium to suppress fluctuation of produced gas in quality and quantity which is to be introduced into the slagging combustion furnace. In the present embodiment, the fluidized-bed furnace may comprise an internal circulating fluidized-bed furnace or an external circulating fluidized-bed furnace. Further, if the fluctuation of produced gas in quality and quantity which is to be introduced into the subsequent slagging combustion furnace can be suppressed, as a gasification furnace, a kiln furnace can be used other than the fluidized-bed furnace described in the present embodiment.

The produced gas m accompanied by fine fixed carbon and discharged from the fluidized-bed gasification furnace 5 comprises combustible gas. Since the atmosphere contains no oxygen up to the inlet port or inlet of the swirling-type slagging combustion furnace 8, the produced gas m is unburned gas. In the swirling-type slagging combustion furnace 8, the produced gas m and the fixed carbon are mixed with the preheated combustion air b1 in a swirling flow created in the primary combustion chamber 8a, and combusted rapidly at a high temperature of 1200 to 1500°C. The combustion is completed in the inclined secondary chamber 8b.

Ash content in the fixed carbon is entirely converted due to a high temperature into slag mist which is mostly trapped by molten slag phase on an inner wall of the primary combustion chamber 8a under a centrifugal force of the swirling flow. The trapped molten slag then flows down on the inner wall of the primary combustion chamber 8a and enters the secondary combustion chamber 8b, and is then discharged from the bottom of the slag separation section 8c. The slag e discharged from the bottom of the slag separation section 8c is conveyed by the slag conveyer 9. Unburned combustibles remaining in the gas are completely combusted in the tertiary combustion chamber 8d by the combustion air b1 supplied into the tertiary combustion chamber 8d.

The exhaust gas j discharged from the waste heat boiler 10 is led to the waste heat boiler 10, and a high-temperature and high-pressure steam g generated in the waste heat boiler 10 is supplied to the steam turbine 16 coupled to a generator to generate electric power. The exhaust gas j discharged from the waste heat boiler 10 preheats the combustion air b1 in the air preheater 11, and condense water f supplied from the steam turbine 16 in the economizer 12, and thus the temperature of the exhaust gas j is lowered. Then, the exhaust gas j from which fly ash h1 containing basic ash and heavy metal ash is removed by the first bag filter 13a, is neutralized by mixing powdery slaked lime i as dechlorination agent. Thereafter, the exhaust gas j passes through the second bag filter 13b by which neutralized ash h2 is removed, and passes through the induced draft fan 19, and is then discharged from the stack 15 to the atmosphere.

The slaked lime i reacts mainly with hydrogen chloride contained in the exhaust gas j to produce calcium chloride. Normally, the slaked lime i is added to the exhaust gas j by 1.5 to 2.5 equivalent to hydrogen chloride contained in the exhaust gas j. Neutralized ash h2 containing calcium chloride is treated in the ash treatment device 17 to form treated ash k. The amount of fly ash h1 returned to the swirling-type slagging combustion furnace 8 can be adjusted. The collected fly ash h1 is partly or wholly returned to the swirling-type slagging combustion furnace 8. After removing the fly ash h1 from the exhaust gas j in the first bag filter 13a, the exhaust gas j is neutralized before the exhaust gas j enters the second bag filter 13b. Therefore, the amount of slaked lime i to be used can be smaller, compared with the case in which the exhaust gas j is neutralized before the exhaust gas j enters the first bag filter 13a.

The fly ash h1 collected by the first bag filter 13a and containing basic agent and heavy metal ash is accumulated in the ash accumulator 18a, the accumulated fly ash h1 is partly or wholly conveyed with pneumatic transportation to the swirling-type slagging combustion furnace 8 by the carrier air b2, and then melted in the swirling-type slagging combustion furnace 8 to produce slag. Therefore, the percentage of slagging ([slag weight/(slag weight + fly ash weight)] × 100(%)) is further increased. Further, the fly ash h1 collected by the waste heat boiler 10 and the economizer 12 and accumulated in the ash accumulators 18b and 18c is partly or wholly conveyed with pneumatic transportation to the swirling-type slagging combustion furnace 8 by the carrier air b2, and then melted in the swirling-type slagging combustion furnace 8 to produce slag. Therefore, the percentage of slagging is further increased. When the collected fly ash h1 is not returned to the swirling-type slagging combustion furnace 8, the percentage of slagging is in the range of 70 to 80 %. In the present embodiment, the percentage of slagging can be increased to 90 % or more.

In addition to the method in which the fly ash h1 is directly returned to the swirling-type slagging combustion furnace, there is a method in which the fly ash h1 is returned indirectly to the swirling-type slagging combustion furnace via the gasification furnace such that the fly ash h1 is introduced into the fluidized-bed gasification furnace 5 together with the wastes a using the waste feeder 4 of the fluidized-bed gasification furnace 5, or the fly ash h1 is introduced into the fluidized-bed gasification furnace 5 together with sand using the sand circulating system of the fluidized-bed gasification furnace 5. The fly ash h1 may be returned to the duct which connects the gasification furnace and the slagging combustion furnace.

Next, arrangement of nozzles mounted on the swirling-type slagging combustion furnace 8 for returning the collected fly ash h1 collected by the first bag filter 13a, the economizer 12, and the waste heat boiler 10 to the swirling-type slagging combustion furnace 8 will be described below with reference to FIGS. 2A and 2B.

Four combustion air nozzles 21 are mounted on the upper portion of the primary combustion chamber 8a of the swirling-type slagging combustion furnace 8 at angularly equal intervals in an outer circumferential direction of the primary combustion chamber 8a. The combustion air nozzles 21 are disposed horizontally, and serve to introduce the combustion air b1 in a direction along an inner circumferential surface 8e having a circular shape in a horizontal cross section of the primary combustion chamber 8a so that the combustion air b1 introduced into the primary combustion chamber 8a creates a swirling flow in a counterclockwise direction in FIG. 2B. An inlet duct 20 for introducing the produced gas m supplied from the fluidized-bed gasification furnace 5 into the primary combustion chamber 8a is mounted on the swirling-type slagging combustion furnace 8. The inlet duct 20 is arranged such that the produced gas m is introduced into the primary combustion chamber 8a in a direction along the inner circumferential surface 8e of the primary combustion chamber 8a so as to create a swirling flow in a counterclockwise direction in FIG. 2B.

Three nozzles are mounted vertically in line on the primary combustion chamber 8a at the location where the inlet duct 20 is attached to the primary combustion chamber 8a. These three nozzles are arranged so as to introduce return ash into the slagging combustion furnace horizontally. The uppermost nozzle serves as a return ash nozzle 22 for introducing the collected fly ash h1 discharged from the waste heat boiler 10, the air preheater 11 and the economizer 12 into the primary combustion chamber 8a. The return ash nozzle 22 constitutes an introduction device. The intermediate nozzle serves as a return ash nozzle 23 for introducing the collected fly ash h1 discharged from the first bag filter 13a into the primary combustion chamber 8a. The return ash nozzle 23 also constitutes an introduction device. Further, the lowermost nozzle serves as a combustion air nozzle 24 for introducing the combustion air b1 into the primary combustion chamber 8a.

The fly ash h1 collected in the air preheater 11 may be accumulated, joined to the fly ash h1 collected by the waste heat boiler 10, and then returned to the swirling-type slagging combustion furnace 8 through the return ash nozzle 22.

The above three nozzles introduce the fly ash h1 and the combustion air b1 into the primary combustion chamber 8a in a direction along the inner circumferential surface 8e of the swirling-type slagging combustion furnace 8 and along the flow of the produced gas m such that the fly ash h1 and the combustion air b1 create and support a swirling flow in a counterclockwise direction in FIG. 2B. Either of the collected fly ash h1 discharged from the economizer 12 and the collected fly as h1 discharged from the waste hear boiler 10 may be returned to the primary combustion chamber 8a, and the other may not be returned to the primary combustion chamber 8a.

The return ash nozzles 22 and 23 are attached to the primary combustion chamber 8a at the location where the inlet duct 20 for introducing the produced gas m is attached to the primary combustion chamber 8a, and are attached at the location near the combustion air nozzle 24 in the same direction as the combustion air nozzle 24. Therefore, the produced gas m is combusted at the location where the produced gas m is introduced from the inlet duct 20 into the interior of the primary combustion chamber 8a, namely the introduction port of the produced gas m from the gasification furnace in the combustion chamber of the slagging combustion furnace, thus generating a flame and achieving high-temperature combustion. Further, because the collected fly ash h1 is introduced into the swirling-type slagging combustion furnace 8 such that the collected fly ash h1 is entrained by the flow of the produced gas m, the fly ash h1 can be led to the combustion area of the produced gas m, and efficiently melted.

In this manner, the collected fly ash h1 is returned to the primary combustion chamber 8a, and efficiently melted, and hence the percentage of slagging can be further increased. Further, because the fly ash h1 is supplied into the swirling-type slagging combustion furnace 8 in such a manner that the fly ash h1 is entrained by the combustion air b1, and the produced gas m reacts with the combustion air b1 to form a high-temperature flame immediately, the fly ash h1 is supplied directly into the formed high-temperature flame in a dense state. Therefore, particles of the fly ash h1 are adhered to each other to make the size of the particles larger, and hence the fly ash h1 tends to be trapped on the inner wall surface of the primary combustion chamber 8a and melted efficiently on the inner wall surface. The flow velocity of the return ash is preferably 20 m/s at the outlets of the return ash nozzles 22 and 23. In this method, it is desirable to use carrier air for the fly ash h1 as combustion air.

It is desirable that the return ash nozzles 22 and 23 are mounted on the upper half (upper half at the side of the inlet duct 20) of the primary combustion chamber 8a of the swirling-type slagging combustion furnace 8. In general, because the proper amount of air is supplied so that the produced gas m introduced into the swirling-type slagging combustion furnace 8 is combusted in the area of the upper half of the primary combustion chamber 8a, if the return ash nozzles 22 and 23 are mounted on the lower half of the primary combustion chamber 8a, the area near the return ash nozzles 22 and 23 is cooled by carrier air, and hence the fly ash h1 is liable not to be melted. Only the fly ash h1 discharged from the first bag filter 13a should be returned to the primary combustion chamber 8a, and the fly ash h1 discharged from the economizer 12 and the waste heat boiler 10 should not be returned to the primary combustion chamber 8a. In this case, among the three nozzles attached to the primary combustion chamber 8a at the location where the inlet duct is attached to the primary combustion chamber 8a, the intermediate nozzle should serve as a return ash nozzle for introducing the fly ash h1 discharged from the first bag filter 13a, and the uppermost and lowermost nozzles should serve as a combustion air nozzle for introducing the combustion air b1.

In the above embodiment, the counterclockwise swirling flow is formed in the swirling-type slagging combustion furnace as shown in FIG. 2B. However, the inlet duct, the combustion air nozzle, and the return ash nozzle may be arranged so as to form a clockwise swirling flow in FIG. 2B, and this arrangement is also effective in the same manner as the above embodiment.

Further, an ash pulverizer for pulverizing ash may be provided in the line 60 at the location between the waste heat boiler and the ash accumulator 18b, or the location between the junction of the fly ash h1 discharged from the air preheater 11 and the fly ash h1 discharged from the economizer 12 and the ash accumulator 18c. The collected fly ash h1 has a large diameter, and hence by pulverizing the fly ash h1 finely, the fly ash h1 can be reliably returned to the swirling-type slagging combustion furnace 8 by pneumatic transportation without clogging.

Further, it is desirable that after the fly ash discharged from the air preheater 11 and the fly ash discharged from the economizer 12 are gathered, the fly ash discharged from the waste heat boiler 10 is also gathered. The gathered fly ash which is formed by three kinds of fly ash may be pulverized finely by a single ash pulverizer, the gathered and pulverized fly ash may be fed to a single ash discharge device of a single ash accumulator comprising an ash storage tank and the ash discharge device, and the gathered and pulverized fly ash discharged from the ash discharge device may be supplied with pneumatic transportation to the swirling-type slagging combustion furnace by a single blower.

The fly ash h1 discharged from the waste heat boiler 10, the fly ash h1 discharged from the air preheater 11, and the fly ash h1 discharged from the economizer 12 may be separately returned to the swirling-type slagging combustion furnace 8. Among the amount of the fly ash h1 collected by the waste heat boiler 10, the amount of the fly ash h1 collected by the air preheater 11, the amount of the fly ash collected by the economizer 12, any one of them may be smaller than the other, the smaller amount of the fly ash h1 may be accumulated in the ash accumulator, and may be separately recovered, without being returned to the swirling-type slagging combustion furnace 8.

As shown in FIG. 1, the waste (a) may be treated by a treatment method comprising a first step for pyrolizing and gasifying the wastes (a) at a low temperature to produce gas m; a second step for combusting the gas m at a high temperature and melting solid components contained in the gas m; a third step for filtrating the exhaust gas j generated in the second step by the first filter 13a to collect fly ash h1 contained in the exhaust gas j; a fourth step for injecting a neutralizer i into the exhaust gas j discharged from the first filter 13a; a fifth step for filtrating the exhaust gas j into which the neutralizer i has been injected, by a second filter (second ash separator/second ash collector) 13b to collect neutralized ash h2 contained in the exhaust gas j; a sixth step for returning the fly ash h1 collected by the first filter 13a to the slagging combustion furnace 8; a seventh step performed prior to the third step for recovering energy of the exhaust gas j discharged from the slagging combustion furnace 8 by the waste heat boiler 10; and an eighth step for returning fly ash h1 collected by the waste heat boiler 10 to the slagging combustion furnace 8.

Further, the waste a may be treated by a treating method comprising a ninth step performed prior to the third step for recovering energy of the exhaust gas j discharged from the waste heat boiler 10; and a tenth step for returning fly ash h1 collected by the economizer 12 to the slagging combustion furnace 8.

For example, as shown in FIGS. 1 and 2, in the sixth step, the fly ash h1 collected by the first filter or the waste heat boiler or the economizer or the air preheater may be returned to the slagging combustion furnace 8 so as to be introduced into the primary combustion chamber 8a in the direction along the inner circumferential surface 8e of the primary combustion chamber 8a.

For example, as shown in FIGS. 1, 2A and 2B, in the sixth step, the collected fly ash h1 may be returned to the area where the produced gas m which has not contacted the combustion air b1 and has not been combusted exists in the slagging combustion furnace 8.

As described above, according to the present invention, because the first filter, the second filter, the injection device, the first conveying device, and the recovery device are provided, the exhaust gas is filtrated by the first filter, the collected fly ash is returned to the slagging combustion furnace by conveying the collected fly ash with the first conveying device, the neutralizer is injected into the exhaust gas discharged from the first filter by the injection device, the exhaust gas into which the neutralizer has been injected is filtrated by the second filter to collect the neutralized ash, and the collected neutralized ash is recovered by the recovery device.

Therefore, because the fly ash collected by the first filter is conveyed to the slagging combustion furnace, the percentage of slagging in the slagging combustion furnace can be increased by melting the fly ash in the slagging combustion furnace, and the collected fly ash which needs neutralization treatment can be reduced. Further, because the neutralizer is injected into the exhaust gas from which the fly ash has been removed by the first filter, the amount of the neutralizer to be used can be reduced.

In the above embodiment, a gasification and slagging combustion treatment for treating wastes are described. However, the present invention is also applicable to a two-stage gasification apparatus comprising a fluidized-bed gasification furnace and a swirling-type slagging combustion gasification furnace. Specifically, the fluidized-bed gasification furnace may employ the same type as the fluidized-bed gasification furnace described in the above embodiment. In the swirling-type slagging combustion gasification furnace, the combustible gas obtained by pyrolysis and gasification in the fluidized-bed gasification furnace is reformed at a high temperature of 1300°C or higher to produce gas composed mainly of H₂, CO, and CO₂, and fly ash is melted into slag. In this case also, in some cases, in the introduction section of the swirling-type slagging combustion gasification furnace, the percentage of slagging is required to be increased. In such case also, ash contained in the produced gas discharged from the swirling-type slagging combustion gasification furnace is collected in the ash collector provided at the subsequent stage of the swirling-type slagging combustion gasification furnace, and the collected ash is returned to the slagging combustion gasification furnace and the fluidized-bed gasification furnace with pneumatic transportation by using inert gas, and thus increasing the percentage of slagging as with the above embodiment. Further, in the slagging combustion gasification furnace, nozzles are arranged so that a swirling flow of gas in a clockwise direction or a swirling flow of gas in a counterclockwise can be formed, and the collected ash is introduced into the respective nozzles, as with the above embodiment.

### Industrial Applicability

The present invention is applicable to waste treatment apparatus and method for combusting and treating wastes such as municipal wastes, refuse-derived fuel (RDF), plastic wastes, waste FRP, biomass wastes, automobile wastes and waste oil.

## Claims

1. A waste treatment apparatus comprising:
a gasification furnace for gasifying wastes to produce combustible gas;
a slagging combustion furnace for combusting said combustible gas and melting solid components contained in said combustible gas to generate exhaust gas;
a first filter for filtrating said exhaust gas discharged from said slagging combustion furnace and collecting fly ash contained in said exhaust gas;
an injection device for injecting a neutralizer into said exhaust gas discharged from said first filter;
a second filter for filtrating said exhaust gas into which said neutralizer has been injected, and collecting neutralized ash contained in said exhaust gas;
a recovery device for recovering said neutralized ash which has been collected; and
a conveying device for conveying fly ash collected by said first filter to said slagging combustion furnace.

2. A waste treatment apparatus according to claim 1, further comprising:
a waste heat boiler for recovering thermal energy of said exhaust gas discharged from said slagging combustion furnace; and
a conveying device for conveying fly ash collected by said waste heat boiler to said slagging combustion furnace.

3. A waste treatment apparatus according to claim 2, further comprising:
an economizer for preheating water to be fed to said waste heat boiler by thermal energy of said exhaust gas discharged from said waste heat boiler; and
a conveying device for conveying fly ash collected by said economizer to said slagging combustion furnace.

4. A waste treatment apparatus according to claim 3, further comprising:
an air preheater for preheating combustion air to be fed to said gasification furnace and said slagging combustion furnace by thermal energy of said exhaust gas discharged from said waste heat boiler; and
a conveying device for conveying fly ash collected by said air preheater to said slagging combustion furnace.

5. A waste treatment apparatus according to any one of claims 1 to 4, further comprising an introduction device for introducing said fly ash conveyed to said slagging combustion furnace into said slagging combustion furnace in a direction along an inner circumferential surface of said slagging combustion furnace.

6. A waste treatment apparatus comprising:
a gasification furnace for gasifying wastes to produce combustible gas;
a slagging combustion furnace for combusting said combustible gas and melting solid components contained in said combustible gas to generate exhaust gas;
a filter for filtrating said exhaust gas discharged from said slagging combustion furnace and collecting fly ash contained in said exhaust gas;
a conveying device for conveying said fly ash collected by said filter to said slagging combustion furnace; and
an introduction device for introducing said fly ash conveyed to said slagging combustion furnace into said slagging combustion furnace.

7. A waste treatment apparatus according to claim 6, wherein said fly ash is introduced into said slagging combustion furnace in a direction along an inner circumferential surface of said slagging combustion furnace.

8. A waste treatment apparatus according to claim 6, wherein said introduction device is mounted on said slagging combustion furnace at a location where said combustible gas which has not been combusted exists.

9. A waste treatment apparatus according to claim 6, further comprising an inlet duct for introducing said combustible gas into said slagging combustion furnace, wherein said introduction device is mounted on said inlet duct.

10. A waste treatment method comprising:
pyrolizing and gasifying wastes to produce combustible gas;
combusting said combustible gas and melting solid components contained in said combustible gas to generate exhaust gas;
filtrating said exhaust gas discharged from said slagging combustion furnace and collecting fly ash contained in said exhaust gas;
injecting a neutralizer into said exhaust gas discharged from said first filter;
filtrating said exhaust gas into which said neutralizer has been injected, by a second filter, and collecting neutralized ash contained in said exhaust gas; and
returning said fly ash collected by said first filter to said slagging combustion furnace.

11. A waste treatment apparatus according to claim 6, wherein said fly ash conveyed to said slagging combustion furnace is supplied into said slagging combustion furnace in such a manner that said fly ash is entrained by combustion air.
